# EUROPEAN PATENT APPLICATION

(11) **EP 4 465 414 A1**
(43) Date of publication of application: **20.11.2024**
(21) Application number: 24165095.1
(22) Date of filing: 21.03.2024
(51) Int. Cl.: H01M 10/613, H01M 10/647, H01M 10/653, H01M 10/6554, H01M 50/211, H01M 50/502

(54) **BATTERY PACK**

(30) Priority: 18.05.2023 KR 20230064195
(71) Applicant: SK On Co., Ltd., Seoul 03161 (KR)
(72) Inventor: YOO, Tak Kyung, 34124 Daejeon (KR); LEE, Jeong Joo, 34124 Daejeon (KR); LEE, Seung Hun, 34124 Daejeon (KR); CHOI, Yang Kyu, 34124 Daejeon (KR)
(74) Representative: Prüfer & Partner mbB Patentanwälte · Rechtsanwälte

(57) **Abstract**

A battery pack includes: a plurality of battery assemblies, respectively including a cell stack in which a plurality of battery cells are stacked; a pack housing forming an accommodation space that accommodates the plurality of battery assemblies and including an upper cooling plate, a lower cooling plate, and a side wall extending between the upper cooling plate and the lower cooling plate; a first heat conduction member disposed between the plurality of battery assemblies and the upper cooling plate; and a second heat conduction member disposed between the plurality of battery assemblies and the lower cooling plate, in which each of the first heat conduction member and the second heat conduction member is in contact with the cell stack.

## Description

### TECHNICAL FIELD

The present disclosure relates to a battery pack including a plurality of battery assemblies in which a plurality of battery cells are stacked.

### BACKGROUND

Unlike primary batteries, secondary batteries may be charged with and discharged of electrical energy. Thus, secondary batteries may be applied to various fields such as digital cameras, mobile phones, laptop computers, and hybrid vehicles. Examples of the secondary batteries may include nickel-cadmium batteries, nickel-metal hydride batteries, nickel-hydrogen batteries, and lithium secondary batteries.

The secondary batteries may be manufactured as pouch-type battery cells or can-type battery cells. The pouch-type battery cell has a structure in which an electrode assembly is accommodated inside a flexible pouch. The can-type battery cell has a structure in which an electrode assembly is accommodated inside a rigid casing, and may be implemented as a cylindrical battery cell or a prismatic battery cell.

A plurality of battery cells are electrically connected and used. At this time, the plurality of battery cells form a cell stack and are disposed inside a module housing to form a battery module. A plurality of battery modules may be disposed inside a pack housing to form a battery pack.

A battery pack accommodates a plurality of battery modules inside a pack housing. Heat generated inside each battery module may be dissipated to the outside through the pack housing. According to the related art, heat generated from a cell stack is dissipated to the outside through a module housing and the pack housing. Accordingly, the related art has a problem in that a thermal resistance is large and cooling efficiency deteriorates because a large number of components are disposed on a heat transfer path.

In addition, the module housing that entirely surrounds the cell stack is disposed inside the pack housing, which leads to deterioration in space efficiency and low energy density.

Furthermore, the battery pack according to the related art dissipates heat through a lower portion of the pack housing, and thus, cooling performance is not sufficient.

### SUMMARY

An aspect of the present disclosure may provide a battery pack that may improve cooling efficiency and cooling performance.

Another aspect of the present disclosure may provide a battery pack that may reduce a thermal resistance at upper and lower portions of a pack housing.

Another aspect of the present disclosure may provide a battery pack that may restrict a flow of various substances, such as gas or dust, between a plurality of cell stacks.

Another aspect of the present disclosure may provide a battery pack that may increase space efficiency and energy density.

According to an aspect of the present disclosure, a battery pack may include: a plurality of battery assemblies, respectively including a cell stack in which a plurality of battery cells are stacked; a pack housing forming an accommodation space that accommodates the plurality of battery assemblies and including an upper cooling plate, a lower cooling plate, and a side wall extending between the upper cooling plate and the lower cooling plate; a first heat conduction member disposed between the plurality of battery assemblies and the upper cooling plate; and a second heat conduction member disposed between the plurality of battery assemblies and the lower cooling plate, in which each of the first heat conduction member and the second heat conduction member is in contact with the cell stack.

The battery pack may further include a sealing member disposed on at least a portion of a perimeter of the first heat conduction member below the upper cooling plate.

The sealing member may have a shape surrounding a perimeter of a region in which the first heat conduction member is disposed.

At least a portion of the sealing member may be disposed on an upper surface of the battery assembly.

The side wall may include an outer side wall disposed along edges of the upper cooling plate and the lower cooling plate, and a partition wall disposed inside the outer side wall and partitions the accommodation space into a plurality of spaces, and the sealing member may impede or interrupts a flow of substances between the plurality of spaces.

Each of the plurality of battery assemblies may further include: a bus bar assembly including a bus bar electrically connected to the cell stack, and a support plate supporting the bus bar; and an assembly housing covering a portion of the cell stack and including side plates disposed to face side surfaces of the cell stack.

The side plate may be disposed on an outer side of the support plate and include at least one fastening plate coupled to the side wall.

The sealing member may include a first portion disposed on an upper surface of the battery assembly and sealing a space between the fastening plate and the cell stack.

The sealing member may include a first portion disposed between the bas bar assembly and the upper cooling plate.

The bas bar assembly may further include an insulating cover that insulates the bus bar and the side plate from each other, and the first portion may be disposed between the upper cooling plate and at least one of the support plate or the insulating cover.

The sealing member may include a second portion disposed between the side wall and the upper cooling plate.

The sealing member may be attached to a lower surface of the upper cooling plate.

Upper and lower surfaces of the cell stack may be exposed to an outside of the assembly housing.

The side plates may include first side plates spaced apart from each other in a first direction with the cell stack interposed therebetween, and second side plates spaced apart from each other in a second direction perpendicular to the first direction with the cell stack interposed therebetween, and the first side plates and the second side plates may be coupled to each other.

Each of the upper cooling plate and the lower cooling plate may cover the plurality of battery assemblies.

Each of the upper cooling plate and the lower cooling plate may have an area larger than a total area of the plurality of battery assemblies.

At least one of the upper cooling plate or the lower cooling plate may include a cooling passage through which a cooling medium flows.

Each of the plurality of battery cells may include a cell body portion in which an electrode assembly is accommodated, and a sealing portion that seals at least a portion of a perimeter of the cell body portion, the sealing portion may include a first sealing portion in which an electrode lead connected to the electrode assembly is disposed, and a second sealing portion in which the electrode lead is not disposed, and at least one of the first heat conduction member or the second heat conduction member may be disposed to accommodate the second sealing portion.

### BRIEF DESCRIPTION OF DRAWINGS

The above and other aspects, features, and advantages of the present disclosure will be more clearly understood from the following detailed description taken in conjunction with the accompanying drawings, in which:
FIG. 1 is an exploded perspective view of a battery pack according to an exemplary embodiment;
FIG. 2 is a perspective view of a battery assembly illustrated in FIG. 1;
FIG. 3 is a partially exploded perspective view of the battery assembly illustrated in FIG. 2;
FIG. 4 is a perspective view illustrating an example of a battery cell;
FIG. 5 is a cross-sectional view of the battery pack taken along line I-I' of FIG. 2;
FIG. 6 is a cross-sectional view of the battery pack taken along line II-II' of FIG. 2;
FIG. 7 is a plan view of the battery assembly illustrated in FIG. 2; and
FIG. 8 is a bottom view of an upper cooling plate according to an exemplary embodiment.

### DETAILED DESCRIPTION

Hereinafter, exemplary embodiments in the present disclosure will now be described in detail with reference to the accompanying drawings.

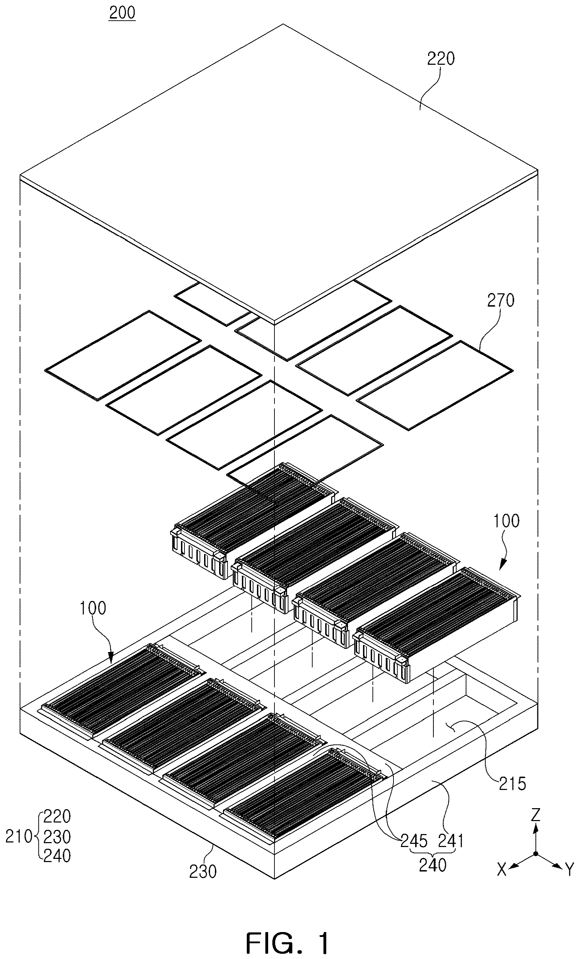

FIG. 1 is an exploded perspective view of a battery pack 200 according to an exemplary embodiment.

Referring to FIG. 1, the battery pack 200 according to an exemplary embodiment may include a plurality of battery assemblies 100 and a pack housing 210 that accommodates the plurality of battery assemblies 100.

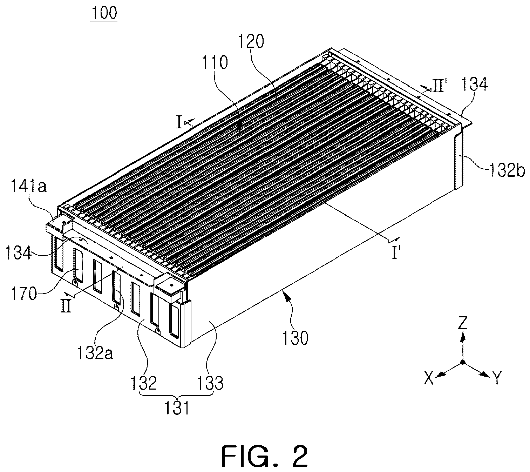

The plurality of battery assemblies 100 may each include a cell stack (110 in FIG. 2) in which a plurality of battery cells 120 are stacked.

The pack housing 210 may form an accommodation space 215 that accommodates the plurality of battery cells 120. The pack housing 210 may include an upper cooling plate 220, a lower cooling plate 230, and a side wall 240. The upper cooling plate 220 and the lower cooling plate 230 may be disposed to be spaced apart from each other in a third direction (Z). The side wall 240 may extend in the third direction (Z) between the upper cooling plate 220 and the lower cooling plate 230.

The side wall 240 may include an outer side wall 241 disposed along edges of the upper cooling plate 220 and the lower cooling plate 230, and a partition wall 245 that is disposed inside the outer side wall 241 and partitions the accommodation space 215 into a plurality of spaces. The outer side wall 241 may form an exterior of the pack housing 210, and the partition wall 245 may be disposed to cross the outer side wall 241.

The lower cooling plate 230 may be disposed below the battery assemblies 100 and dissipate heat generated from the battery assemblies 100 to the outside. The upper cooling plate 220 may be disposed above the battery assemblies 100 and dissipate heat generated from the battery assemblies 100 to the outside.

The upper cooling plate 220 may have a size sufficient to cover the plurality of battery assemblies 100. The upper cooling plate 220 may be formed as one wide plate and cover the plurality of battery assemblies 100. The upper cooling plate 220 may have an area larger than the total area of the plurality of battery assemblies 100.

The lower cooling plate 230 may have a size sufficient to cover the plurality of battery assemblies 100. The lower cooling plate 230 may be formed as one wide plate and cover the plurality of battery assemblies 100. The lower cooling plate 230 may have an area larger than the total area of the plurality of battery assemblies 100. The lower cooling plate 230 may be formed integrally with at least a portion of the side wall 240. For example, the lower cooling plate 230 may be formed integrally with at least a portion of the outer side wall 241.

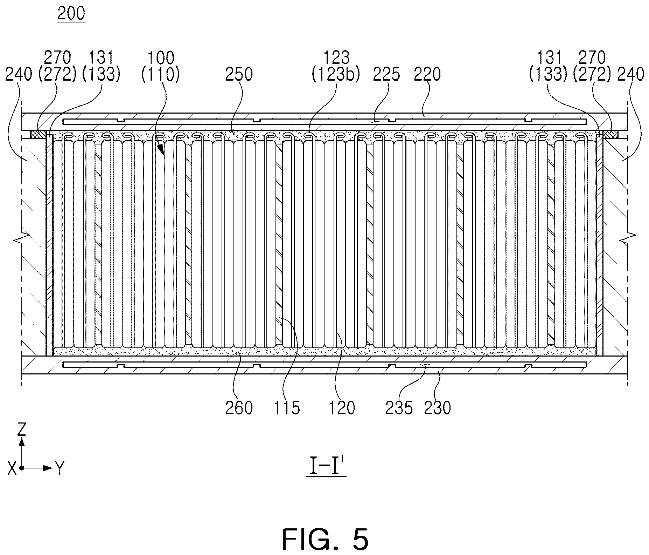

At least one of the upper cooling plate 220 or the lower cooling plate 230 may include cooling passages (225 and 235 in FIG. 5) through which a refrigerant (cooling medium) flows to smoothly dissipate heat through the upper cooling plate 220 and/or the lower cooling plate 230.

The battery pack 200 according to an exemplary embodiment may further include at least one sealing member 270. The sealing member 270 may be disposed below the upper cooling plate 220 and may be disposed on at least a portion of a perimeter of a first heat conduction member 250. The sealing member 270 may have a shape surrounding a perimeter of a region in which the first heat conduction member 250 is disposed. For example, the sealing member 270 may have a closed curve shape such as a square. At least a portion of the sealing member 270 may be disposed on an upper surface of the battery assembly 100. At least a portion of the sealing member 270 may be disposed between the battery assemblies 100 and the upper cooling plate 220. The sealing member 270 may impede or interrupt a flow of substances between the plurality of spaces in which the battery assemblies 100 are disposed. The sealing member 270 may restrict the flow of various substances, such as gas or dust, between one battery assembly 100 and another battery assembly 100 adjacent to the one battery assembly 100. The sealing member 270 may be disposed on each battery assembly 100. The number of sealing members 270 may be the same as the number of battery assemblies 100.

The sealing member 270 may be formed of a material having a sealing property. For example, the sealing member 270 may be formed of a material capable of elastic deformation and having a sealing property, such as rubber or silicone. The material of the sealing member 270 is not limited to the above-described materials, and may be changed to various known materials.

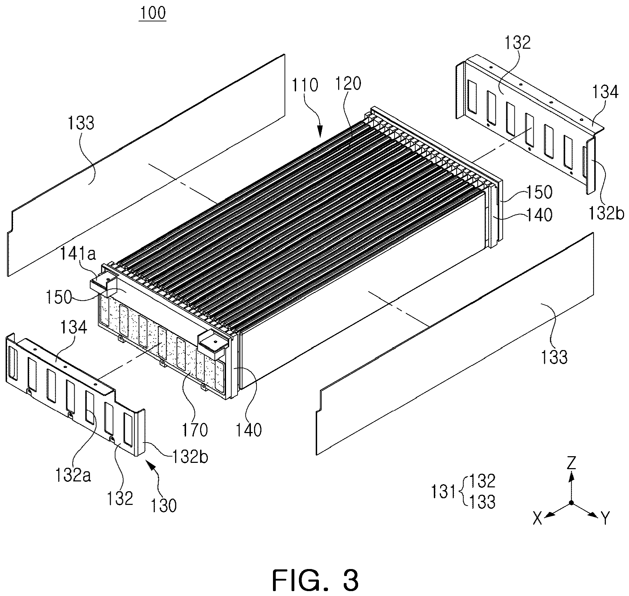

FIG. 2 is a perspective view of the battery assembly 100 illustrated in FIG. 1, and FIG. 3 is a partially exploded perspective view of the battery assembly 100 illustrated in FIG. 2.

Referring to FIGS. 2 and 3, the battery assembly 100 may include the cell stack 110 in which the plurality of battery cells 120 are stacked, a bus bar assemblies 140, and an assembly housing 130.

The cell stack 110 may have a shape in which the plurality of battery cells 120 are stacked in a second direction (Y). At least some of the plurality of battery cells 120 may be fixed by double-sided tape. According to an exemplary embodiment, the battery cell 120 may include a pouch-type secondary battery, but is not limited thereto. For example, the battery cell 120 may include a cylindrical or prismatic can-type secondary battery.

The bus bar assemblies 140 may be electrically connected to the cell stack 110. The bus bar assemblies 140 may be coupled to the cell stack 110 at opposite ends of the cell stack 110 in a first direction (X).

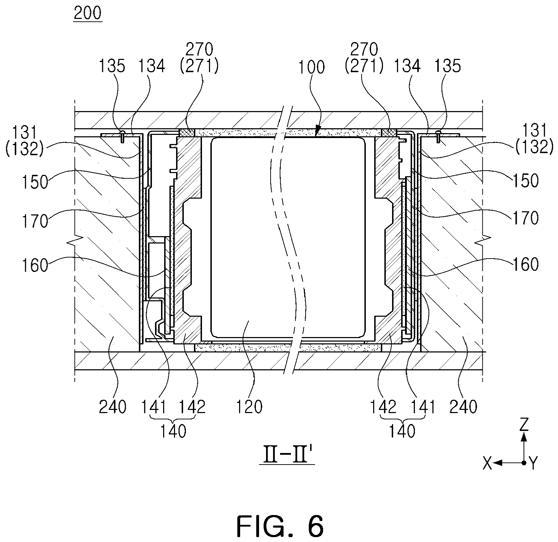

The bus bar assembly 140 may include at least one bus bar (141 in FIG. 6) electrically connected to the cell stack 110, and a connection terminal 141a for electrical connection with the outside of the battery assembly 100 may be connected to the bus bar 141.

The bus bar assembly 140 may include an insulating cover 150 that electrically insulates the bus bar 141 and the assembly housing 130 from each other. The insulating cover 150 may have a gas discharge hole for discharging gas generated from the cell stack 110 to the outside. A safety cover 170 covering the gas discharge hole may be disposed on an outer surface of the insulating cover 150.

The assembly housing 130 may cover a portion of the cell stack 110. The assembly housing 130 may include side plates 131 disposed to face side surfaces of the cell stack 110.

Upper and lower surfaces of the cell stack 110 may be exposed to the outside of the assembly housing 130. That is, the assembly housing 130 may not cover most of the upper surface of the cell stack 110 and most of the lower surface of the cell stack 110.

A battery module according to the related art has a configuration in which a module housing covers both the upper and lower surfaces of the cell stack 110 or only one of the upper and lower surfaces of the cell stack 110, but the assembly housing 130 according to the exemplary embodiment may have a configuration in which the assembly housing 130 does not cover most of the upper surface of the cell stack 110 and most of the lower surface of the cell stack 110. The term "assembly housing 130" will be used in the exemplary embodiment to distinguish it from the module housing according to the related art. In the detailed description and claims, a structure of the assembly housing 130 means a structure in which most (for example, 70% or more) of the upper surface and most (for example, 70% or more) of the lower surface of the cell stack 110 are exposed to the outside of the assembly housing 130.

The side plates 131 may include first side plates 132 spaced apart from each other in the first direction (X) with the cell stack 110 interposed therebetween, and second side plates 133 spaced apart from each other in the second direction (Y) perpendicular to the first direction (X) with the cell stack 110 interposed therebetween.

In a case in which the bus bar assemblies 140 are positioned at opposite ends of the cell stack 110 in the first direction (X), the first side plates 132 may be disposed to face the bus bar assemblies 140. In a case where the cell stack 110 includes the battery cells 120 stacked in the second direction (Y), the second side plates 133 may be disposed to face wider surfaces of the battery cells 120. The second side plate 133 may be fixed to the battery cell 120 by adhesive means such as double-sided tape.

The first side plates 132 and the second side plates 133 may be disposed to surround the cell stack 110 and the bus bar assemblies 140. The first side plates 132 and the second side plates 133 may be coupled to each other. The first side plate 132 may include an extension portion 132b that is bent and extends toward the second side plate 133. The extension portion 132b may have a shape that covers the second side plate 133. The first side plate 132 and the second side plate 133 may be coupled to each other through the extension portion 132b. For example, fastening means such as a bolt may penetrate through the extension portion 132b of the first side plate 132 and the second side plate 133 and then be fastened to the bus bar assembly 140. Further, the first side plate 132 and the second side plate 133 may be coupled to each other by welding along an edge of the extension portion 132b. Meanwhile, the coupling between the first side plate 132 and the second side plate 133 and the coupling between the side plate 131 and the bus bar assembly 140 may be performed using various known coupling methods. With such a coupling structure of the side plate 131, fixation of the cell stack 110 and the bus bar assembly 140 to the side plate 131 may be maintained even in a state in which the assembly housing 130 does not cover the upper and lower surfaces of the cell stack 110.

The side plate 131 may have an opening 132a through which gas discharged through the bus bar assembly 140 is discharged to the outside. In a case in which the first side plate 132 faces the bus bar assembly 140, the opening 132a may be formed in the first side plate 132.

The side plate 131 may include at least one fastening plate 134 for fixing the battery assembly 100 to the side wall 240. The fastening plate 134 may be coupled to the side wall 240 in the form of being placed on the side wall 240. The battery assembly 100 may include a plurality of fastening plates 134. The fastening plate 134 may be coupled to the side wall 240 that is adjacent to the battery assembly 100.

The fastening plate 134 may be disposed on at least one of the first side plate 132 or the second side plate 133. As an example, the fastening plate 134 may be provided on each of the first side plates 132. Alternatively, the fastening plate 134 may be provided on each of the second side plates 133, or the fastening plates 134 may be provided on the first side plate 132 and the second side plate 133.

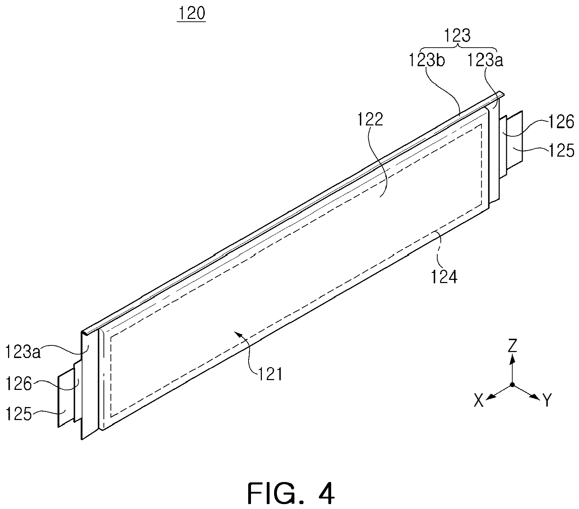

FIG. 4 is a perspective view illustrating an example of the battery cell 120.

Referring to FIG. 4, the battery cell 120 may include a pouch type secondary battery, as an example.

The battery cell 120 may include a cell body portion 122 in which an electrode assembly 124 is accommodated, a sealing portion 123 that seals at least a portion of a perimeter of the cell body portion 122, and an electrode lead 125 electrically connected to the electrode assembly 124.

The battery cell 120 may have a configuration in which the electrode assembly 124 is accommodated in a pouch 121 forming a casing. The electrode assembly 124 includes a plurality of electrode plates and electrode tabs and is accommodated in the pouch 121. Here, the electrode plate includes a positive electrode plate and a negative electrode plate, and the electrode assembly 124 may be formed by stacking the positive electrode plate and the negative electrode plate with a separator interposed therebetween in a state in which wider surfaces of the positive electrode plate and the negative electrode plate face each other. Each of multiple positive electrode plates and multiple negative electrode plates includes the electrode tab, and the electrode tabs of the same polarity may be in contact with each other and may be connected to the electrode lead 125 of the same polarity.

The pouch 121 may include the cell body portion 122 and the sealing portion 123. The cell body portion 122 may have a container shape and provide an internal space to accommodate the electrode assembly 124 and an electrolyte solution.

The sealing portion 123 may be a portion of the pouch 121 that is bonded to seal the perimeter of the cell body portion 122. The sealing portion 123 may be formed in the form of a flange extending outward from the cell body portion 122 having the container shape, and may be disposed along at least a portion of the perimeter of the cell body portion 122. A thermal fusion method may be used to bond the pouch 121 to form the sealing portion 123, but a method for bonding the pouch 121 is not limited thereto.

In addition, in the present exemplary embodiment, the sealing portion 123 may include a first sealing portion 123a formed in a region in which the electrode lead 125 is exposed to the outside, and a second sealing portion 123b formed in a region in which the electrode lead 125 is not disposed. A portion of the electrode lead 125 may be exposed to the outside of the pouch 121. At least one side of the electrode lead 125 may be covered by an insulating film 126 at a position where the electrode lead 125 is led out. The insulating film 126 improves sealing performance of the first sealing portion 123a and simultaneously ensures electrical insulation between the electrode lead 125 and the pouch 121.

As an exemplary embodiment, the pouch 121 may be formed of a single casing. In other words, the pouch 121 may be completed by forming one or two accommodation portions on a single casing and then folding the casing such that the accommodation portions form one space (that is, the cell body portion 122).

As an exemplary embodiment, the cell body portion 122 may have a quadrangular shape. The sealing portion 123 may be formed at a portion of the perimeter of the cell body portion 122 where portions of the casing overlap each other. In the exemplary embodiment illustrated in FIG. 4, the sealing portion 123 may be formed at an outer edge of the cell body portion 122, and may be provided on only three sides of the cell body portion 122. That is, in the exemplary embodiment illustrated in FIG. 4, the sealing portion 123 may not be disposed on any one side of the cell body portion 122 at the outer edge of the cell body portion 122.

As an exemplary embodiment, the electrode leads 125 may be disposed on opposite sides of the battery cell 120 in a length direction (X) to face opposite directions. The electrode lead 125 of a first polarity (for example, a positive electrode) may be disposed on one side of the battery cell 120 in the length direction, and the electrode lead 125 of a second polarity (for example, a negative electrode) may be disposed on the other side of the battery cell 120 in the length direction. The two electrode leads 125 may be disposed in the sealing portions 123 formed on different sides.

Meanwhile, the pouch 121 used in the exemplary embodiment in the present disclosure is not limited to a three-sided sealing structure in which a single casing is folded and the sealing portions 123 are formed on three sides of the cell body portion 122 as illustrated in FIG. 4. For example, the pouch 121 may have a four-sided sealing structure in which the cell body portion 122 is formed by overlapping two casings, and the sealing portions 123 are formed on all the four sides of the perimeter of the cell body portion 122.

The battery cell 120 configured as described above may be implemented as a known secondary battery, such as a lithium ion (Li-ion) battery or a nickel metal hydride (Ni-MH) battery that may be charged and discharged.

Meanwhile, although the pouch-type secondary battery has been described as an example of the battery cell 120 in FIG. 4, an exemplary embodiment in the present disclosure does not exclude the use of a prismatic secondary battery as the battery cell 120.

FIG. 5 is a cross-sectional view of the battery pack 200 taken along line I-I' of FIG. 2. FIG. 5 illustrates the pack housing 210, the first heat conduction member 250, and a second heat conduction member 260 together with a cross section of the battery assembly 100 taken along line I-I' of FIG. 2 to illustrate an overall cross section of the battery pack 200.

The battery pack 200 may include the battery assemblies 100 each including the cell stack 110, the upper cooling plate 220, the lower cooling plate 230, the first heat conduction member 250, and the second heat conduction member 260.

The battery assembly 100 may include the cell stack 110 in which the plurality of battery cells 120 are stacked in the second direction (Y). The cell stack 110 may include a buffer pad 115 disposed between at least some of the battery cells 120. The buffer pad 115 may be compressed and elastically deformed when a specific battery cell 120 swells, thereby suppressing an increase in overall volume of the cell stack 110. The buffer pad 115 may be formed of polyurethane foam, but a material or structure of the buffer pad 115 is not limited thereto.

The upper cooling plate 220 may be disposed above the battery assemblies 100. The upper cooling plate 220 may cool the cell stack 110 by dissipating heat generated from the cell stack 110 to the outside. The upper cooling plate 220 may include the cooling passage 225 through which a cooling medium flows to improve cooling performance. The cooling passage 225 may be formed inside the upper cooling plate 220, but is not limited thereto.

The lower cooling plate 230 may be disposed below the battery assemblies 100. The lower cooling plate 230 may cool the cell stack 110 by dissipating heat generated from the cell stack 110 to the outside. The lower cooling plate 230 may include the cooling passage 235 through which the cooling medium flows to improve cooling performance. The cooling passage 235 may be formed inside the lower cooling plate 230, but is not limited thereto. A liquid such as a coolant may be used as the cooling medium flowing through the cooling passages 225 and 235, and a gas such as air may also be used.

The first heat conduction member 250 may be disposed between the battery assembly 100 and the upper cooling plate 220. The first heat conduction member 250 may be in contact with an upper portion of the cell stack 110 and transfer heat generated from the cell stack 110 to the upper cooling plate 220. The first heat conduction member 250 may be disposed in the form of a pad between the upper surface of the cell stack 110 and the upper cooling plate 220, or may be applied in a liquid or gel state.

The second heat conduction member 260 may be disposed between the battery assemblies 100 and the lower cooling plate 230. The second heat conduction member 260 may be in contact with a lower portion of the cell stack 110 and transfer heat generated from the cell stack 110 to the lower cooling plate 230. The second heat conduction member 260 may be disposed in the form of a pad between the lower surface of the cell stack 110 and the lower cooling plate 230, or may be applied in a liquid or gel state.

In a case in which the battery cell 120 is a pouch-type secondary battery, the battery cell 120 may include the sealing portion 123. The sealing portion 123 may include the second sealing portion 123b in which the electrode lead (125 in FIG. 4) is not disposed. The second sealing portion 123b may have a bent shape, and accordingly, heat transfer may not be smooth in the region in which the second sealing portion 123b is disposed.

At least one of the first heat conduction member 250 or the second heat conduction member 260 may be disposed to accommodate the second sealing portion 123b to thereby enable smooth heat transfer in the region in which the second sealing portion 123b is disposed. For example, in a case in which the second sealing portion 123b is disposed to face the upper cooling plate 220, the first heat conduction member 250 may be installed on the cell stack 110 to accommodate the second sealing portion 123b. In this case, the first heat conduction member 250 may be applied in a liquid or gel state on the upper surface of the cell stack 110, but is not limited thereto.

Heat generated from the battery cell 120 may be efficiently transferred to the upper cooling plate 220 and the lower cooling plate 230 and then dissipated to the outside due to a high thermal conductivity of the first heat conduction member 250 and the second heat conduction member 260. The first heat conduction member 250 and the second heat conduction member 260 may include at least some of thermal grease, a thermal adhesive, a thermally conductive epoxy, and a heat dissipation pad to ensure favorable heat transfer, but are not limited thereto.

The first heat conduction member 250 and the second heat conduction member 260 may also have a high insulation property. For example, the first heat conduction member 250 and the second heat conduction member 260 may be formed of a material having a dielectric strength in a range of 10 to 30 KV/mm. In a case in which such a material having a high insulation property is used, insulation between the battery cell 120 and the pack housing 210 may be maintained by the first heat conduction member 250 and the second heat conduction member 260 disposed around the battery cell 120 even when partial dielectric breakdown occurs in the battery cell 120.

According to an exemplary embodiment, heat generated from the cell stack 110 may be transferred to the upper cooling plate 220 through the first heat conduction member 250 and then dissipated to the outside, and may be transferred to the lower cooling plate 230 through the second heat conduction member 260 and then dissipated to the outside. In this way, heat generated from the cell stack 110 may be dissipated through both upper and lower portions of the battery pack 200. As a result, the cooling efficiency of the battery assembly 100 may be improved.

In addition, the upper surface of the cell stack 110 may be in thermal contact with the upper cooling plate 220 through the first heat conduction member 250, and the lower surface of the cell stack 110 may be in thermal contact with the lower cooling plate 230 through the second heat conduction member 260 unlike the related art. Accordingly, a heat transfer path at the upper and lower portions of the cell stack 110 may be shortened and a thermal resistance may be reduced. In addition, the cell stack 110 and the upper cooling plate 220 may be connected through the first heat conduction member 250, and the cell stack 110 and the lower cooling plate 230 may be connected through the second heat conduction member 260. Therefore, the thermal resistance may be reduced. Further, since the cell stack 110 is installed in the pack housing 210 in a state in which the upper and lower surfaces of the cell stack 110 are exposed to the outside of the assembly housing 130, an energy density of the battery pack 200 may be increased.

Referring to FIG. 5 together with FIGS. 1 and 2, the sealing member 270 may be disposed below the upper cooling plate 220 and may be disposed in at least a portion of a perimeter of the first heat conduction member 250. The sealing member 270 may have a shape surrounding the perimeter of the region in which the first heat conduction member 250 is disposed. The first heat conduction member 250 may be positioned inside the sealing member 270. Accordingly, the sealing member 270 may block the first heat conduction member 250 from moving to the outside of the sealing member 270 when the upper cooling plate 220 is coupled on an upper side of the first heat conduction member 250.

Further, the sealing member 270 may impede or interrupt a flow of substances between the plurality of spaces in which the battery assemblies 100 are disposed. Accordingly, the sealing member 270 may block various substances, such as gas or dust, from being introduced from the outside of the battery assembly 100 into the inside of the battery assembly 100, that is, a space where the cell stack 110 is installed.

As illustrated in FIG. 5, a portion of the sealing member 270 may be disposed between the side wall 240 and the upper cooling plate 220. The sealing member 270 may include a second portion 272 disposed between the side wall 240 and the upper cooling plate 220. The second portion 272 of the sealing member 270 may be in contact with each of the side wall 240 and the upper cooling plate 220.

The battery assembly 100 may include the side plate 131, and the sealing member 270 may be disposed outside the side plate 131. The second portion 272 of the sealing member 270 may be in contact with an outer surface of the side plate 131. The second portion 272 of the sealing member 270 may block the first heat conduction member 250 from moving to the outside through a space between the second side plate 133 and the upper cooling plate 220 or block substances outside the sealing member 270 from being introduced into the cell stack 110.

FIG. 6 is a cross-sectional view of the battery pack 200 taken along line II-II' of FIG. 2. FIG. 6 illustrates the pack housing 210, the first heat conduction member 250, and the second heat conduction member 260 together with a cross section of the battery assembly 100 taken along line II-II' of FIG. 2 to illustrate the overall cross section of the battery pack 200.

The battery cell 120 may be electrically connected to the bus bar assembly 140. The bus bar assembly 140 may include the bus bar 141 electrically connected to the battery cell 120 and a support plate 142 supporting the bus bar 141. The support plate 142 may include an electrically insulating material. The bus bar assembly 140 may further include the insulating cover 150 that insulates the bus bar 141 and the side plate 131 from each other. The insulating cover 150 includes an electrically insulating material and may block electrical connection between the bus bar 141 and the first side plate 132.

A shielding member 160 for blocking gas or flame may be additionally installed on the insulating cover 150. The shielding member 160 may be disposed between the insulating cover 150 and the bus bar 141. In a case in which an event occurs in the cell stack 110, the shielding member 160 may allow the passage of gas or flame generated from the battery cell 120 in a direction toward the outside of the cell stack 110, but may not allow the passage in the opposite direction. For example, an internal pressure of the battery assembly 100 may be higher than an external pressure of the battery assembly 100 due to gas or flame caused by thermal runaway of the battery cell 120, and such a pressure difference may cause the gas or flame to pass through the shielding member 160 and be discharged to the outside of the side plate 131. On the other hand, gas or flame discharged to the outside of the side plate 131 may be blocked by the shielding member 160 and may not be introduced again into the battery assembly 100.

The safety cover 170 may be additionally installed on the insulating cover 150 to prevent foreign substances from entering the battery assembly 100. The safety cover 170 may be disposed between the side plate 131 and the insulating cover 150. For example, the safety cover 170 may include a plastic material that may melt at the time of thermal runaway of the battery cell 120. Therefore, the entering of foreign substances is prevented in normal situations, and the discharge of gas or flame is not hindered at the time of the thermal runaway. In addition, as the safety cover 170 is disposed, unintentional contact with an internal component of the battery assembly 100, such as the bus bar 141, may be prevented when a user or worker handles the battery assembly 100.

The side plate 131 may be disposed outside the support plate 142 and the insulating cover 150 and may be coupled to the side wall 240. The side plate 131 may include at least one fastening plate 134 coupled to the side wall 240. The fastening plate 134 may be fastened by a fastening member 135 in a state of being placed on the side wall 240. Accordingly, the side plate 131 may remain fixed to the side wall 240 even when vibration of the battery pack 200 occurs, and contact between the side plate 131 and the upper cooling plate 220 may be reduced.

On the other hand, the support plate 142 and the insulating cover 150 may be indirectly fixed to the side wall 240 by the side plate 131. Accordingly, in a case where a situation such as vibration occurs, at least one of the support plate 142 or the insulating cover 150 may come into contact with the upper cooling plate 220, dust or foreign substances may occur. Since at least one of the support plate 142 or the insulating cover 150 is formed of an electrically insulating material such as a synthetic resin, the occurrence of dust or foreign substances may increase.

The sealing member 270 may have a shape surrounding the perimeter of the region in which the first heat conduction member 250 is disposed. Therefore, the sealing member 270 may block dust or foreign substances occurring from at least a portion of the support plate 142 and the insulating cover 150 from being introduced into the cell stack 110.

At least a portion of the sealing member 270 may be disposed on the upper surface of the battery assembly 100. The sealing member 270 may include a first portion 271 disposed on the upper surface of the battery assembly 100. The first portion 271 may seal a space between the fastening plate 134 and the cell stack 110 below the upper cooling plate 220. The first portion 271 may be disposed between the bus bar assembly 140 and the upper cooling plate 220. The first portion 271 of the sealing member 270 may block direct contact between the bus bar assembly 140 and the upper cooling plate 220. The first portion 271 may be disposed between the upper cooling plate 220 and at least one of the support plate 142 or the insulating cover 150. As an example, the first portion 271 of the sealing member 270 may be disposed along a boundary between the support plate 142 and the insulating cover 150.

The first portion 271 of the sealing member 270 may block the first heat conduction member 250 from moving to the outside through a space between the bus bar assembly 140 and the upper cooling plate 220 or block substances outside the sealing member 270 from being introduced into the cell stack 110.

In this way, the sealing member 270 may restrict the flow of various substances such as gas or dust between the plurality of cell stacks 110 and may protect the cell stack 110 from adjacent battery assemblies 100 or adjacent components.

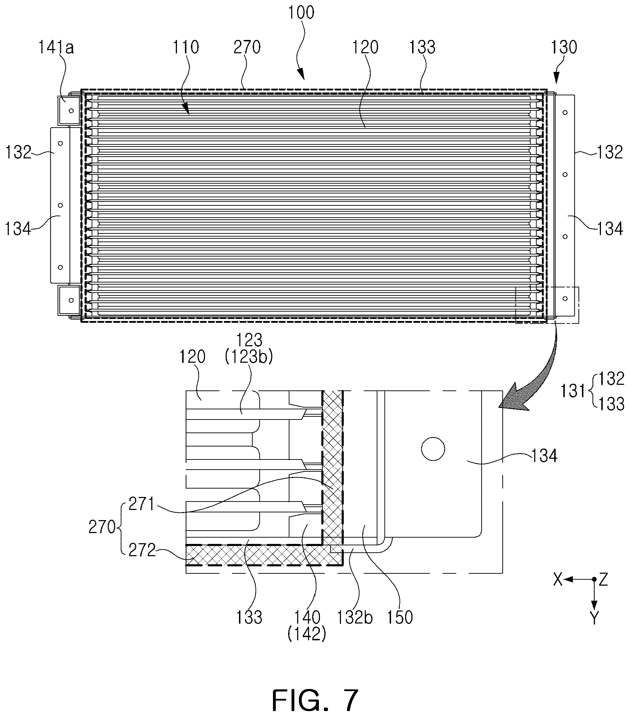

FIG. 7 is a plan view of the battery assembly 100 illustrated in FIG. 2 and illustrates a position of the sealing member 270.

Referring to FIG. 7, the sealing member 270 may be disposed on the upper surface of the battery assembly 100. The sealing member 270 may include the first portion 271 disposed between the bus bar assembly 140 and the upper cooling plate 220, and the second portion 272 disposed between the side wall 240 and the upper cooling plate 220.

The first portion 271 of the sealing member 270 may be disposed on an upper surface of at least one of the support plate 142 or the insulating cover 150. For example, the first portion 271 may be disposed along the boundary between the support plate 142 and the insulating cover 150. The second portion 272 of the sealing member 270 may be disposed outside the side plate 131. The second portion 272 may be placed on the side wall 240 outside the second side plate 133.

Meanwhile, the side plates 131 may include the first side plates 132 and the second side plates 133, and the first side plate 132 may include the extension portion 132b covering the second side plate 133. The first side plate 132 and the second side plate 133 may be coupled to each other through the extension portion 132b. Further, the first side plate 132 and the second side plate 133 may be fixed to the support plate 142 or the insulating cover 150 through fastening means such as bolts.

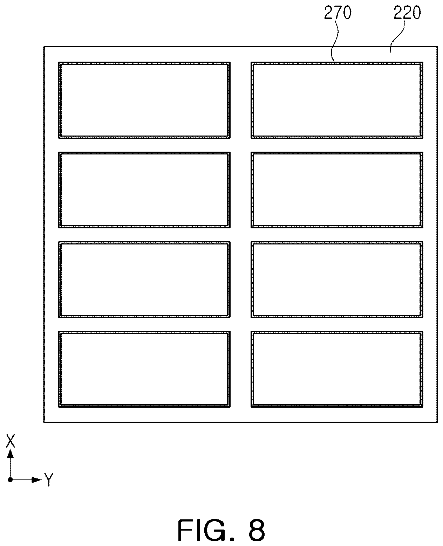

FIG. 8 is a bottom view of the upper cooling plate 220 according to an exemplary embodiment.

As illustrated in FIG. 8, a plurality of sealing members 270 may be fixed to a lower surface of the upper cooling plate 220. The plurality of sealing members 270 may be attached to the lower surface of the upper cooling plate 220 by a known method such as adhesive. Although not illustrated in FIG. 8, a seating groove in which the sealing member 270 is seated may be formed in the lower surface of the upper cooling plate 220 to dispose the sealing member 270 at a certain position.

In a case in which the plurality of sealing members 270 are attached to the lower surface of the upper cooling plate 220 as described above, the position of the sealing member 270 may be stably maintained when the upper cooling plate 220 is coupled to the side wall 240 of the pack housing 210.

In addition, since the sealing member 270 is placed on the cell stack at an accurate position, the first heat conduction member 250 may be stably positioned in a space surrounded by the sealing member 270. The sealing member 270 may prevent the first heat conduction member 250 from being displaced or escaping to the outside when coupling the upper cooling plate 220.

As set forth above, according to the exemplary embodiment in the present disclosure, heat generated from the plurality of cell stacks is dissipated through upper and lower portions of the pack housing, thereby improving cooling efficiency and cooling performance.

The cell stack is installed in the pack housing in a state in which the upper and lower surfaces of the cell stack are exposed to the outside of the assembly housing, and thus, a heat transfer path at upper and lower portions of the pack housing may be shortened and a thermal resistance may be reduced. Since the cell stack and the pack housing are connected through a heat conduction member, the thermal resistance may be reduced.

Further, the sealing member may restrict the flow of various substances such as gas or dust between the plurality of cell stacks and may protect the cell stack from adjacent battery assemblies or adjacent components.

In addition, an energy density of the battery pack may be increased because the cell stack is installed in the pack housing in a state in which the upper and lower surfaces of the cell stack are exposed to the outside of the assembly housing.

Further, an effect of preventing the first heat conduction member from being displaced or escaping to the outside when coupling the upper cooling plate may be obtained.

While exemplary embodiments have been shown and described above, it will be apparent to those skilled in the art that modifications and variations could be made without departing from the scope of the present disclosure as defined by the appended claims. For example, it may be implemented by deleting some components in the above-described embodiments, and each of the embodiments and modified examples may be implemented in combination with each other.

## Claims

1. A battery pack comprising:
a plurality of battery assemblies, respectively including a cell stack in which a plurality of battery cells are stacked;
a pack housing forming an accommodation space that accommodates the plurality of battery assemblies and including an upper cooling plate, a lower cooling plate, and a side wall extending between the upper cooling plate and the lower cooling plate;
a first heat conduction member disposed between the plurality of battery assemblies and the upper cooling plate; and
a second heat conduction member disposed between the plurality of battery assemblies and the lower cooling plate,
wherein each of the first heat conduction member and the second heat conduction member is in contact with the cell stack.

2. The battery pack of claim 1, further comprising a sealing member disposed on at least a portion of a perimeter of the first heat conduction member below the upper cooling plate.

3. The battery pack of claim 2, wherein the sealing member has a shape surrounding a perimeter of a region in which the first heat conduction member is disposed.

4. The battery pack of claim 2 or 3, wherein at least a portion of the sealing member is disposed on an upper surface of the battery assembly.

5. The battery pack of any one of claims 2 to 4, wherein the side wall includes an outer side wall disposed along edges of the upper cooling plate and the lower cooling plate, and a partition wall disposed inside the outer side wall and partitions the accommodation space into a plurality of spaces, and
the sealing member impedes or interrupts a flow of substances between the plurality of spaces.

6. The battery pack of any one of the preceding claims, wherein each of the plurality of battery assemblies further includes:
a bus bar assembly including a bus bar electrically connected to the cell stack, and a support plate supporting the bus bar; and
an assembly housing covering a portion of the cell stack and including side plates disposed to face side surfaces of the cell stack.

7. The battery pack of claim 6, wherein the side plate is disposed on an outer side of the support plate and includes at least one fastening plate coupled to the side wall.

8. The battery pack of claim 7, wherein the sealing member includes a first portion disposed on an upper surface of the battery assembly and sealing a space between the fastening plate and the cell stack, or a first portion disposed between the bas bar assembly and the upper cooling plate.

9. The battery pack of any one of claims 6 to 8, wherein the bas bar assembly further includes an insulating cover that insulates the bus bar and the side plate from each other, and
the first portion is disposed between the upper cooling plate and at least one of the support plate or the insulating cover.

10. The battery pack of any one of claims 2 to 9, wherein the sealing member includes a second portion disposed between the side wall and the upper cooling plate.

11. The battery pack of any one of claims 2 to 9, wherein the sealing member is attached to a lower surface of the upper cooling plate.

12. The battery pack of any one of claims 6 to 11, wherein upper and lower surfaces of the cell stack are exposed to an outside of the assembly housing.

13. The battery pack of any one of claims 6 to 11, wherein the side plates include first side plates spaced apart from each other in a first direction with the cell stack interposed therebetween, and second side plates spaced apart from each other in a second direction perpendicular to the first direction with the cell stack interposed therebetween, and
the first side plates and the second side plates are coupled to each other.

14. The battery pack of any one of claims 1 to 13, wherein each of the upper cooling plate and the lower cooling plate covers the plurality of battery assemblies, or
wherein each of the upper cooling plate and the lower cooling plate has an area larger than a total area of the plurality of battery assemblies.

15. The battery pack of any one of claims 1 to 14, wherein each of the plurality of battery cells includes a cell body portion in which an electrode assembly is accommodated, and a sealing portion that seals at least a portion of a perimeter of the cell body portion,
the sealing portion includes a first sealing portion in which an electrode lead connected to the electrode assembly is disposed, and a second sealing portion in which the electrode lead is not disposed, and
at least one of the first heat conduction member or the second heat conduction member is disposed to accommodate the second sealing portion.
